# EUROPEAN PATENT APPLICATION

(11) **EP 4 491 443 A1**
(43) Date of publication of application: **15.01.2025**
(21) Application number: 24187214.2
(22) Date of filing: 08.07.2024
(51) Int. Cl.: B60L 53/80, B64U 50/39, B60K 1/04

(54) **SYSTEMS AND METHODS FOR CONTROLLING A BATTERY PACK LOADOUT FOR AN AIRCRAFT**

(30) Priority: 07.07.2023 US 202318219276
(71) Applicant: PRATT & WHITNEY CANADA CORP., Longueuil, Québec J4G 1A1 (CA)
(72) Inventor: LACHANCE, Pierre-Luc, (01BE5) Longueuil, J4G 1A1 (CA); NOISEUX, Danny, (01BE5) Longueuil, J4G 1A1 (CA); CYR-CARRIER, Gabriel, (01BE5) Longueuil, J4G 1A1 (CA); TENT, Andrei, (01BE5) Longueuil, J4G 1A1 (CA); LESSARD, Maxime, (01BE5) Longueuil, J4G 1A1 (CA); EDGER-SAUVE, Renaud-Charles, (01BE5) Longueuil, J4G 1A1 (CA); PATRY, Maxime, (01BE5) Longueuil, J4G 1A1 (CA)
(74) Representative: Dehns

(57) **Abstract**

A battery replacement system (74) for controlling a battery pack loadout for an aircraft (1000) includes a vehicle (76) including a battery storage assembly (82), a controller (86), and a battery transfer assembly (84). The battery storage assembly (82) is configured for storing at least one stored battery pack (68). The controller (86) is configured to identify an energy storage prerequisite for a flight or series of flights of the aircraft (1000) using flight information for the aircraft (1000) and to identify a battery pack loadout plan for the aircraft (1000) using the energy storage prerequisite. The battery pack loadout plan identifies one or more of the at least one stored battery pack (68) to be installed on the aircraft (1000). The controller (86) is further configured to control the battery pack loadout for the aircraft (1000) by controlling the battery transfer assembly (84) to receive the one or more of the at least one stored battery pack (68) from the battery storage assembly (82) and install the one or more of the at least one stored battery pack (68) into the aircraft (1000).

## Description

### TECHNICAL FIELD

This disclosure relates generally to battery assemblies for aircraft and aircraft propulsion systems and, more particularly, to systems and methods for controlling a battery pack loadout for an aircraft.

### BACKGROUND OF THE ART

Propulsion systems for aircraft may include an electrical distribution system including one or more battery packs and an electric motor. Before conducting a flight operation with the aircraft, a particular charge level of the one or more battery packs may be obtained. Various systems and methods for controlling a charge level of battery packs for aircraft are known in the art. While these known systems and methods have various advantages, there is still room in the art for improvement.

### SUMMARY

It should be understood that any or all of the features or embodiments described herein can be used or combined in any combination with each and every other feature or embodiment described herein unless expressly noted otherwise.

According to an aspect of the present disclosure, a battery replacement system for controlling a battery pack loadout for an aircraft includes a vehicle including a battery storage assembly, a controller, and a battery transfer assembly. The battery storage assembly is configured for storing at least one stored battery pack. The controller includes a processor in communication with a non-transitory memory storing instructions, which instructions when executed by the processor, cause the processor to identify an energy storage prerequisite for a flight or series of flights of the aircraft using flight information for the aircraft and to identify a battery pack loadout plan for the aircraft using the energy storage prerequisite. The battery pack loadout plan identifies one or more of the at least one stored battery pack to be installed on the aircraft. The instructions, when executed by the processor, further cause the processor to control the battery pack loadout for the aircraft by controlling the battery transfer assembly to receive the one or more of the at least one stored battery pack from the battery storage assembly and install the one or more of the at least one stored battery pack into the aircraft.

In any of the aspects or embodiments described above and herein, the battery pack loadout plan may further identify at least one installed battery pack installed on the aircraft to be removed from the aircraft.

In any of the aspects or embodiments described above and herein, the instructions, when executed by the processor, may further cause the processor to control the battery pack loadout for the aircraft by controlling the battery transfer assembly to receive the at least one installed battery pack from the aircraft and move the at least one installed battery pack to the battery storage assembly.

In any of the aspects or embodiments described above and herein, the controller may further include a user interface terminal on the vehicle. The instructions, when executed by the processor, may further cause the processor to receive the flight information from the user interface terminal.

In any of the aspects or embodiments described above and herein, the flight information may include one or more of a departure location, a landing location, a flight distance for the flight or the series of flights, an aircraft model of the aircraft, a number of passengers for the flight or the series of flights, an aircraft weight of the aircraft, or a weather condition.

In any of the aspects or embodiments described above and herein, the aircraft may have a battery pack capacity and the battery pack loadout plan may include a quantity of battery packs which is less than the battery pack capacity.

In any of the aspects or embodiments described above and herein, the battery storage assembly may include a plurality of rail assemblies. Each rail assembly of the plurality of rail assemblies may include a first rail and a second rail. Each stored battery pack of the at least one stored battery pack may be disposed on the first rail and the second rail of a respective one of the plurality of rail assemblies.

In any of the aspects or embodiments described above and herein, the battery storage assembly may further include at least one linear actuator. The at least one linear actuator may be configured to move the plurality of stored batteries from the plurality of rail assemblies to the battery transfer assembly.

In any of the aspects or embodiments described above and herein, the battery transfer assembly may include a battery transfer tray and an actuator. The battery transfer tray may include a transfer rail assembly including a first transfer rail and a second transfer rail. The battery transfer tray may be mounted to the actuator. The actuator may be configured to selectively position the transfer rail assembly at one of the rail assemblies of the plurality of rail assemblies.

In any of the aspects or embodiments described above and herein, the battery replacement system may further include the at least one stored battery pack. The at least one stored battery pack may include a battery rail assembly including a first battery rail and a second battery rail.

In any of the aspects or embodiments described above and herein, the instructions, when executed by the processor, may further cause the processor to identify a state of charge for each of the at least one stored battery pack and to identify the battery pack loadout plan using the energy storage prerequisite and the identified state of charge for each of the at least one stored battery pack.

According to another aspect of the present disclosure, a method for controlling a battery pack loadout for an aircraft includes receiving flight information for a flight or series of flights of the aircraft with a controller, identifying, with the controller, an energy storage prerequisite for the flight or series of flights of the aircraft using the flight information for the aircraft, and identifying, with the controller, a battery pack loadout plan for the aircraft. The battery pack loadout plan identifies a plurality of battery packs for the aircraft. The plurality of battery packs have a combined state of charge which is equal to or greater than the energy storage prerequisite. The method further includes controlling the battery pack loadout for the aircraft by controlling a vehicle, with the controller, to remove a first battery pack from the aircraft and to install a second battery pack into the aircraft such that the aircraft includes the plurality of battery packs.

In any of the aspects or embodiments described above and herein, receiving the flight information may include receiving the flight information from a user interface terminal disposed on the vehicle.

In any of the aspects or embodiments described above and herein, the flight information may include one or more of a departure location, a landing location, a flight distance for the flight or the series of flights, an aircraft model of the aircraft, a number of passengers for the flight or the series of flights, an aircraft weight of the aircraft, or a weather condition.

In any of the aspects or embodiments described above and herein, the aircraft may have a battery pack capacity and the battery pack loadout plan may include a quantity of battery packs which is less than the battery pack capacity.

In any of the aspects or embodiments described above and herein, removing the first battery pack from the aircraft includes removing the first battery pack with a battery transfer assembly of the vehicle, moving the first battery pack from the battery transfer assembly to a battery storage assembly of the vehicle, and storing the first battery pack in the battery storage assembly.

According to another aspect of the present disclosure, a battery replacement system for controlling a battery pack loadout for an aircraft includes a vehicle including a battery storage assembly and a controller. The battery storage assembly is configured for storing a plurality of stored battery packs. The controller includes a processor in communication with a non-transitory memory storing instructions, which instructions when executed by the processor, cause the processor to identify a state of charge for each of the stored battery packs, identify an energy storage prerequisite for a flight or series of flights of the aircraft using flight information for the aircraft, and identify a battery pack loadout plan for the aircraft using the energy storage prerequisite and the identified state of charge for each of the plurality of stored battery packs. The battery pack loadout plan identifies a plurality of battery packs for the aircraft. The plurality of battery packs have a combined state of charge which is equal to or greater than the energy storage prerequisite. The plurality of battery packs includes at least one battery pack of the plurality of stored battery packs.

In any of the aspects or embodiments described above and herein, the controller may further include a user interface terminal on the vehicle. The instructions, when executed by the processor, may further cause the processor to receive the flight information from the user interface terminal.

In any of the aspects or embodiments described above and herein, the flight information may include one or more of a departure location, a landing location, a flight distance for the flight or the series of flights, an aircraft model of the aircraft, a number of passengers for the flight or the series of flights, an aircraft weight of the aircraft, or a weather condition.

In any of the aspects or embodiments described above and herein, the aircraft may have a battery pack capacity and the plurality of battery packs of the battery pack loadout plan includes a quantity of battery packs which is less than the battery pack capacity.

The present disclosure, and all its aspects, embodiments and advantages associated therewith will become more readily apparent in view of the detailed description provided below, including the accompanying drawings.

### DESCRIPTION OF THE DRAWINGS

FIG. 1 schematically illustrates a side, cutaway view of a hybrid-electric gas turbine engine propulsion system for an aircraft, in accordance with one or more embodiments of the present disclosure.
FIG. 2 illustrates a perspective view of an aircraft including a battery assembly, in accordance with one or more embodiments of the present disclosure.
FIG. 3 illustrates a perspective view of a vehicle for controlling a battery pack loadout for an aircraft, in accordance with one or more embodiments of the present disclosure.
FIG. 4 illustrates a perspective view of a battery pack for use with an aircraft and with the vehicle of FIG. 3, in accordance with one or more embodiments of the present disclosure.
FIG. 5 illustrates a perspective view of a relationship between a plurality of rail assemblies of the vehicle of FIG. 3 with a plurality of the battery packs of FIG. 4, in accordance with one or more embodiments of the present disclosure.
FIG. 6 illustrates a cutaway view of a portion of a battery pack and a rail assembly including a linear actuator, in accordance with one or more embodiments of the present disclosure.
FIG. 7 illustrates a block diagram depicting a method for controlling a battery pack loadout for an aircraft, in accordance with one or more embodiments of the present disclosure.
FIG. 8 illustrates an exemplary battery pack removal sequence, in accordance with one or more embodiments of the present disclosure.
FIG. 9 illustrates an exemplary battery pack installation sequence, in accordance with one or more embodiments of the present disclosure.

### DETAILED DESCRIPTION

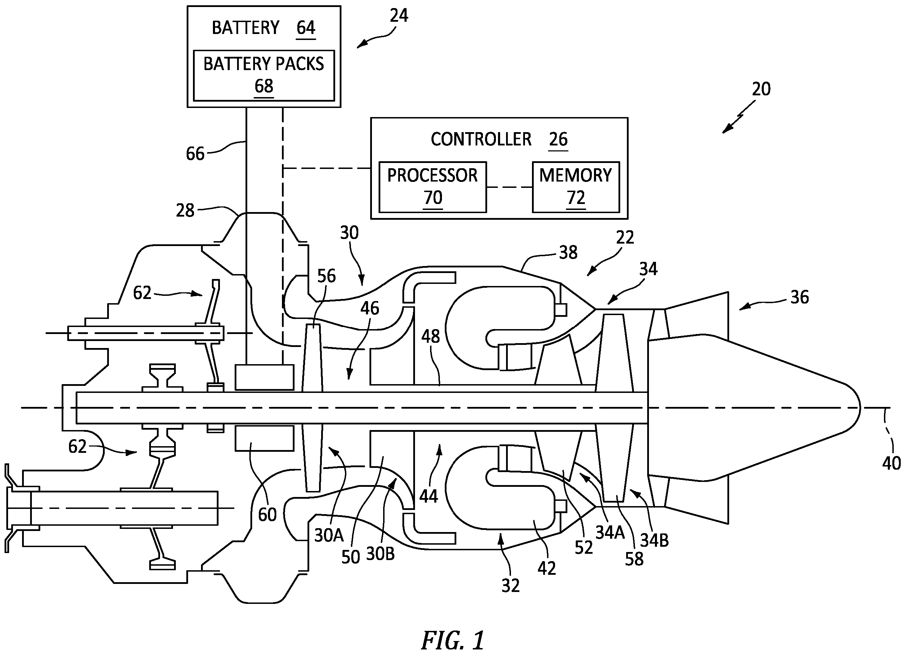

FIG. 1 illustrates aside, cutaway view of a propulsion system 20 configured for an aircraft. Briefly, the aircraft may be a fixed-wing aircraft (e.g., an airplane), a rotary-wing aircraft (e.g., a helicopter), a tilt-rotor aircraft, a tilt-wing aircraft, or any other aerial vehicle. Moreover, the aircraft may be a manned aerial vehicle or an unmanned aerial vehicle (UAV, e.g., a drone). The aircraft propulsion system 20 of FIG. 1 is configured as a hybrid-electric propulsion system including an engine 22. The propulsion system 20 and/or the aircraft on which the propulsion system 20 is installed may include a battery assembly 24. The propulsion system 20 may further include a controller 26. The present disclosure, however, is not limited to aircraft propulsion systems including an engine, and aspects of the present disclosure are equally applicable to fully-electric aircraft propulsion systems.

The engine 22 of FIG. 1 is configured as a turboshaft gas turbine engine. However, the present disclosure is also applicable to other configurations of gas turbine engines such as, but not limited to, a turboprop gas turbine engine, a turbofan gas turbine engine, a turbojet gas turbine engine, a propfan gas turbine engine, an open rotor gas turbine engine, an auxiliary power unit (APU), or the like. Moreover, the present disclosure is also applicable to other configurations of engines such as, but not limited to, a rotary engine (e.g., a Wankel engine), a diesel internal combustion engine, or the like, which may be used for hybrid-electric, aircraft propulsion systems.

The engine 22 of FIG. 1 includes an air inlet 28, a compressor section 30, a combustion section 32, a turbine section 34, an exhaust section 36, and an engine static structure 38. The air inlet 28, the compressor section 30, the combustion section 32, the turbine section 34, and the exhaust section 36 are arranged along an axial centerline 40 (e.g., a rotational axis) of the engine 22. The compressor section 30 may include a low-pressure compressor 30A and a high-pressure compressor 30B. The combustion section 32 may include a combustor 42 forming an annular combustion chamber. The turbine section 34 may include a high-pressure turbine 34A and a low-pressure turbine 34B (e.g., a power turbine). The engine static structure 38 may include, for example, one or more engine cases for the engine 22. The engine static structure 38 may additionally include cowlings, bearing assemblies, and/or other structural components of the engine 22. The one or more engine cases form, house, and/or structurally support one or more components of the air inlet 28, the compressor section 30, the combustion section 32, the turbine section 34, and the exhaust section 36.

Components of the engine 22 of FIG. 1, such as components of the compressor section 30 and the turbine section 34, are arranged as a first rotational assembly 44 (e.g., a high-pressure spool) and a second rotational assembly 46 (e.g., a power spool). The first rotational assembly 44 and the second rotational assembly 46 are mounted for rotation about the axial centerline 40 relative to the engine static structure 38.

The first rotational assembly 44 includes a first shaft 48, a bladed first compressor rotor 50 for the high-pressure compressor 30B, and a bladed first turbine rotor 52 for the high-pressure turbine 34A. The first shaft 48 interconnects the bladed first compressor rotor 50 and the bladed first turbine rotor 52.

The second rotational assembly 46 includes a second shaft 54, a bladed second compressor rotor 56 for the low-pressure compressor 30A, and a bladed second turbine rotor 58 for the low-pressure turbine 34B. The second rotational assembly 46 may further include an electric motor 60. The second shaft 54 interconnects the bladed second compressor rotor 56 and the bladed second turbine rotor 58. The second shaft 54 is directly or indirectly connected to one or more rotational loads (not shown in FIG. 1) such as, but not limited to, a propeller or other propulsor. For example, the second shaft 54 may be coupled with the rotational loads by one or more gear assemblies 62. The gear assemblies 62 may be configured to drive rotation of the rotational loads at a different (e.g., reduced) rotational speed relative to the second shaft 54. The electric motor 60 of FIG. 1 is coupled with the second shaft 54 to drive rotation of the second shaft 54 alone or in combination with the bladed second turbine rotor 58. The electric motor 60 may be directly connected to the second shaft 54. Alternatively, the electric motor 60 may be indirectly coupled with the second shaft 54, for example, using a clutch or gearbox assembly. The present disclosure, however, is not limited to the foregoing exemplary configurations of the electric motor 60.

The battery assembly 24 of FIG. 1 includes a battery 64 and an electrical distribution bus 66. The battery 64 is configured to supply electrical power to one or more electrical loads (e.g., electronic control systems, environmental control systems, electric motors, lighting systems, communication systems, etc.) of the propulsion system 20 and/or its associated aircraft through the electrical distribution bus 66. For example, the battery 64 of FIG. 1 is configured to supply electrical power to the electric motor 60 to facilitate operation of the electric motor 60. As will be discussed in further detail, the battery 64 includes a plurality of battery packs 68 (e.g., selectively removable battery modules) disposed in the propulsion system 20 and/or its associated aircraft. The battery packs may be electrically connected together in series and/or parallel as necessary to configure the battery 64 with the desired electrical characteristics (e.g., voltage output, current output, storage capacity, etc.) for operation of the propulsion system 20 and its associated aircraft.

The controller 26 includes a processor 70 connected in signal communication with memory 72. The processor 70 may include any type of computing device, computational circuit, processor(s), CPU, computer, or the like capable of executing a series of instructions that are stored in the memory 72. Instructions can be directly executable or can be used to develop executable instructions. For example, instructions can be realized as executable or non-executable machine code or as instructions in a high-level language that can be compiled to produce executable or non-executable machine code. Further, instructions also can be realized as or can include data. Computer-executable instructions also can be organized in any format, including routines, subroutines, programs, data structures, objects, modules, applications, applets, functions, etc. The instructions may include an operating system, and/or executable software modules such as program files, system data, buffers, drivers, utilities, and the like. The executable instructions may apply to any functionality described herein to enable the propulsion system 20 and its battery assembly 24 to accomplish the same algorithmically and/or by coordination of their respective components. The memory 72 may include a single memory device or a plurality of memory devices; e.g., a computer-readable storage device that can be read, written, or otherwise accessed by a general purpose or special purpose computing device, including any processing electronics and/or processing circuitry capable of executing instructions. The present disclosure is not limited to any particular type of memory device, which may be non-transitory, and may include read-only memory, random access memory, volatile memory, non-volatile memory, static memory, dynamic memory, flash memory, cache memory, volatile or non-volatile semiconductor memory, optical disk storage, magnetic disk storage, magnetic tape, other magnetic storage devices, or any other medium capable of storing one or more instructions, and/or any device that stores digital information. The memory device(s) may be directly or indirectly coupled to the controller 26. The controller 26 may include, or may be in communication with, an input device that enables a user to enter data and/or instructions, and may include, or be in communication with, an output device configured, for example to display information (e.g., a visual display or a printer), or to transfer data, etc. Communications between the controller 26 and other electrical and/or electronic components (e.g., controllers, sensors, etc.) may be via a hardwire connection or via a wireless connection. A person of skill in the art will recognize that portions of the controller 26 may assume various forms (e.g., digital signal processor, analog device, etc.) capable of performing the functions described herein.

The controller 26 may form or otherwise be part of a battery monitoring system (BMS) for the battery 64. The BMS may be configured to monitor battery 64 health and/or other operating conditions of the battery 64 and its battery packs 68 such as, but not limited to, temperature, current, voltage, and state of charge (SoC). The SoC for the battery 64 and/or the battery packs 68 refers to a measured or estimated stored energy of the battery 64 and/or the battery packs 68 relative to a maximum energy storage capacity of the battery 64 and/or the battery packs 68, respectively. The SoC may be expressed, for example, as a percentage value of a stored energy relative to a maximum energy storage capacity. The controller 26 may additionally or alternatively form or otherwise be part of an electronic engine controller (EEC) for the engine 22. The EEC may control operating parameters of the engine 22 including, but not limited to, fuel flow, stator vane position (e.g., variable compressor inlet guide vane (IGV) position), compressor air bleed valve position, shaft (e.g., first shaft 48 and/or second shaft 54) torque and/or rotation speed, etc. so as to control an engine power or performance of the engine 22. The EEC may modulate fuel flow to the combustor 42 to obtain a desired output power of the engine 22. For example, the EEC may modulate the fuel flow using a closed-loop process in which an output power or other operating parameter of the engine 22 is measured and fuel flow is increased or decreased as a function of the measured output power or operational parameter. In some embodiments, the EEC may be part of a full authority digital engine control (FADEC) system for the propulsion system 20.

During operation of the propulsion system 20 of FIG. 1, ambient air enters the engine 22 through the air inlet 28 and is directed into the compressor section 30. The ambient air is compressed by the bladed second compressor rotor 56 and the bladed first compressor rotor 50 and directed into the combustion chamber of the combustor 42. Fuel is injected into the combustion chamber and mixed with the compressed air to provide a fuel-air mixture. This fuel-air mixture is ignited, and combustion products thereof flow through and sequentially cause the bladed first turbine rotor 52 and the bladed second turbine rotor 58 to rotate. The rotation of the bladed first turbine rotor 52 and the bladed second turbine rotor 58 respectively drive rotation of the first rotational assembly 44 and the second rotational assembly 46. Combustion exhaust gas flowing past the bladed second turbine rotor 58 is directed out of the engine 22 through the exhaust section 36. The controller 26 may selectively control the electric motor 60 to apply a rotational force to the second shaft 54, for example, to drive one or more rotational loads of the second rotational assembly 46 in cooperation with the second bladed turbine rotor 58.

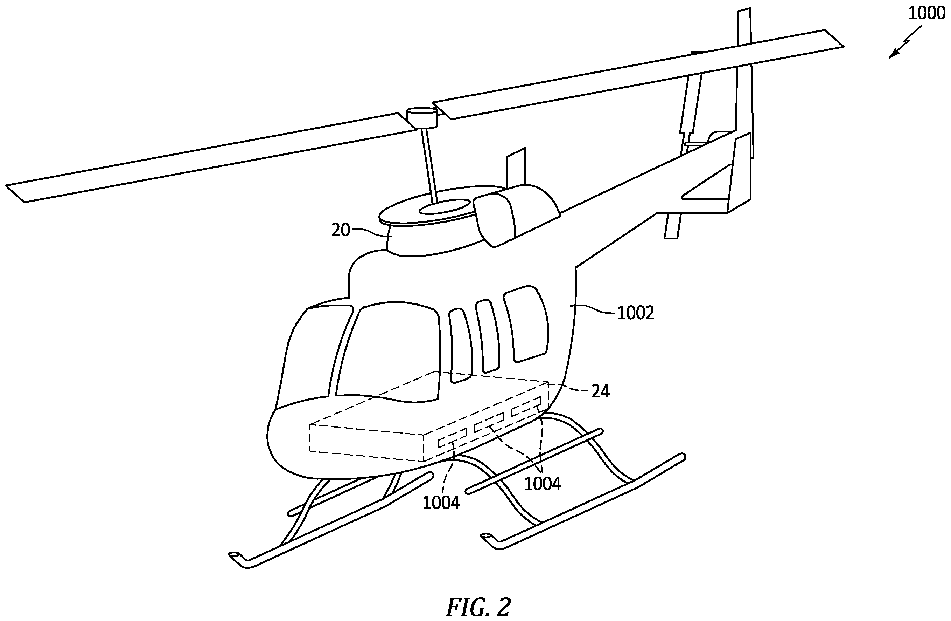

FIG. 2 illustrates an exemplary configuration of an aircraft 1000 including the propulsion system 20 and its battery assembly 24. A housing 1002 (e.g., a fuselage) of the aircraft 1000 of FIG. 2 forms a plurality of battery ports 1004 through which the battery packs 68 may be selectively installed into and selectively removed from the battery assembly 24, as will be discussed in further detail. The present disclosure, however, is not limited to the foregoing exemplary configurations of the aircraft 1000 and the battery assembly 24 of FIG. 2.

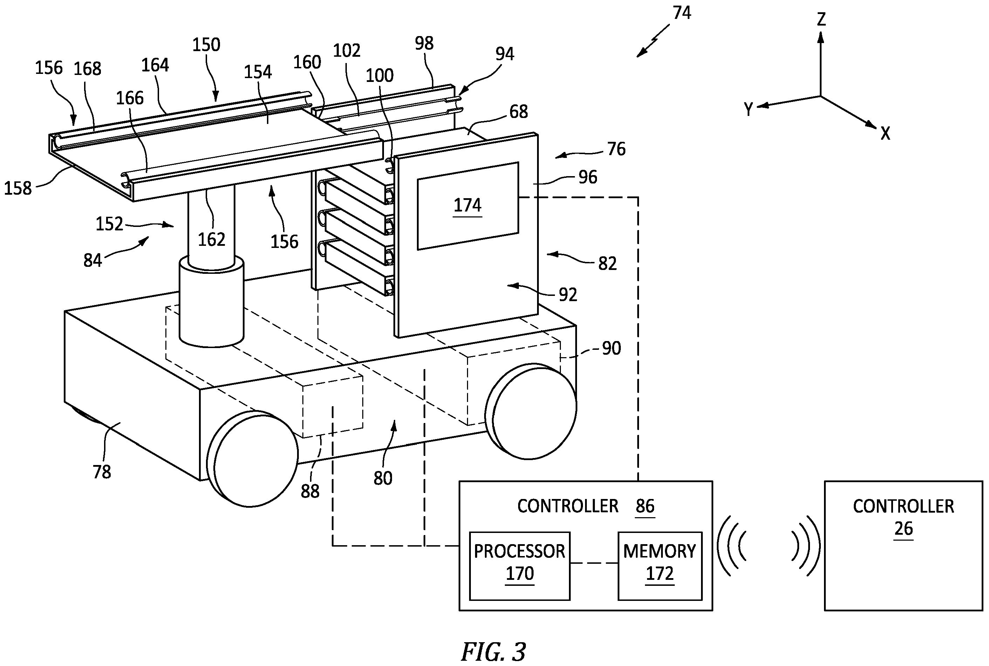

FIG. 3 illustrates a battery replacement system 74 including at least one vehicle 76 configured for installing and removing the battery packs 68 from an aircraft (e.g., the aircraft 1000 of FIG. 2). The vehicle 76 of FIG. 3 includes a vehicle body 78, a propulsion assembly 80, a battery storage assembly 82, a battery transfer assembly 84, and a battery replacement controller 86.

The propulsion assembly 80 may include a vehicle battery 88 and an electric motor 90. The vehicle battery 88 is configured to supply electrical power to the electric motor 90 to facilitate propulsion of the vehicle 76 (e.g., using one or more wheels coupled with the electric motor 90). The vehicle battery 88 may additionally supply electrical power for operation of one or more other assemblies or components of the vehicle such as, but not limited to, the battery storage assembly 82, the battery transfer assembly 84, and the battery replacement controller 86. The vehicle battery 88 may be configured as a rechargeable battery having a battery chemistry such as, but not limited to, lead acid, nickel cadmium (NiCd), nickel-metal hydride (Ni-MH), lithium-ion (Li-ion), lithium-polymer (Li-poly), lithium metal, and the like. The vehicle battery 88 and the electric motor 90 may be disposed within the vehicle body 78, for example, as schematically illustrated in FIG. 3. The propulsion assembly 80 may further include steering equipment, position sensors (e.g., global positioning system (GPS) sensors), one or more cameras, Radar systems, proximity sensors (e.g., ultrasonic proximity sensors), and/or other equipment conventionally known in the art to facilitate autonomous movement and guidance of the vehicle 76 using the propulsion assembly 80.

The battery storage assembly 82 of FIG. 3 includes a housing 92 and a plurality of rail assemblies 94. The housing 92 of FIG. 3 includes a first lateral housing panel 96 and a second lateral housing panel 98. The first lateral housing panel 96 and the second lateral housing panel 98 are mounted to or otherwise disposed on the vehicle body 78. The first lateral housing panel 96 and the second lateral housing panel 98 extend outward from the vehicle body 78 (e.g., vertically outward along the Z-axis). The first lateral housing panel 96 is laterally spaced from the second lateral housing panel 98 (e.g., along the X-axis). The rail assemblies 94 are disposed on and/or within the housing 92. Each of the rail assemblies 94 includes a first rail 100 and a second rail 102. For example, the first rail 100 of FIG. 3 is disposed at (e.g., on, adjacent, or proximate) the first lateral housing panel 96 and the second rail 102 of FIG. 3 is disposed at (e.g., on, adjacent, or proximate) the second lateral housing panel 98. However, the present disclosure is not limited to foregoing exemplary configurations of the first rail 100 and the second rail 102. The first rail 100 is vertically aligned with the second rail 102 (e.g., along the Z-axis).

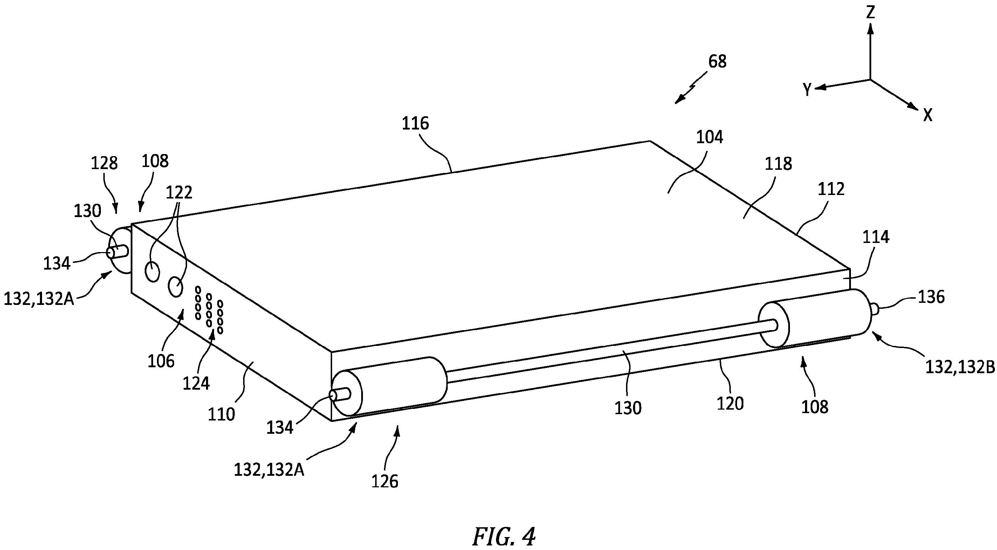

FIG. 4 illustrates an exemplary configuration of the battery pack 68 for use with the vehicle 76 and the aircraft 1000 (see FIG. 2). The battery pack 68 of FIG. 4 includes a housing 104, a connection interface 106, and a rail assembly 108. The housing 104 extends between and to a first end 110 of the housing 104 and a second end 112 of the housing 104 (e.g., along the Y-axis). The housing 104 extends between and to a first lateral side 114 of the housing 104 and a second lateral side 116 of the housing 104. The housing 104 extends between and to a top side 118 of the housing 104 and a bottom side 120 of the housing 104. The housing 104 surrounds and provides support for one or more battery cells for the battery pack 68. The battery pack 68 (e.g., the one or more battery cells) is configured as a rechargeable battery having a battery chemistry such as, but not limited to, lead acid, nickel cadmium (NiCd), nickel-metal hydride (Ni-MH), lithium-ion (Li-ion), lithium-polymer (Li-poly), lithium metal, and the like.

The connection interface 106 of FIG. 4 includes electrical connection terminals 122 (e.g., positive and negative terminals) for electrically connecting the battery pack 68 to the battery assembly 24 (see FIGS. 1 and 2), to an electrical charging system, and/or to the vehicle 76. The connection interface 106 may additionally include one or more signal communication terminals 124 configured to facilitate communication between the controller 26 (see FIG. 1) and/or the battery replacement controller 86 and the battery pack 68 (e.g., internal sensors, thermal control units, or other systems of the battery pack 68). The connection interface 106 of FIG. 4 is disposed at (e.g., on, adjacent, or proximate) the first end 110. The battery pack 68 may include one or more additional connection interfaces 106. For example, the battery pack 68 may include a second connection interface 106 at (e.g., on, adjacent, or proximate) the second end 112. The present disclosure, however, is not limited to the foregoing exemplary configurations of the connection interface 106.

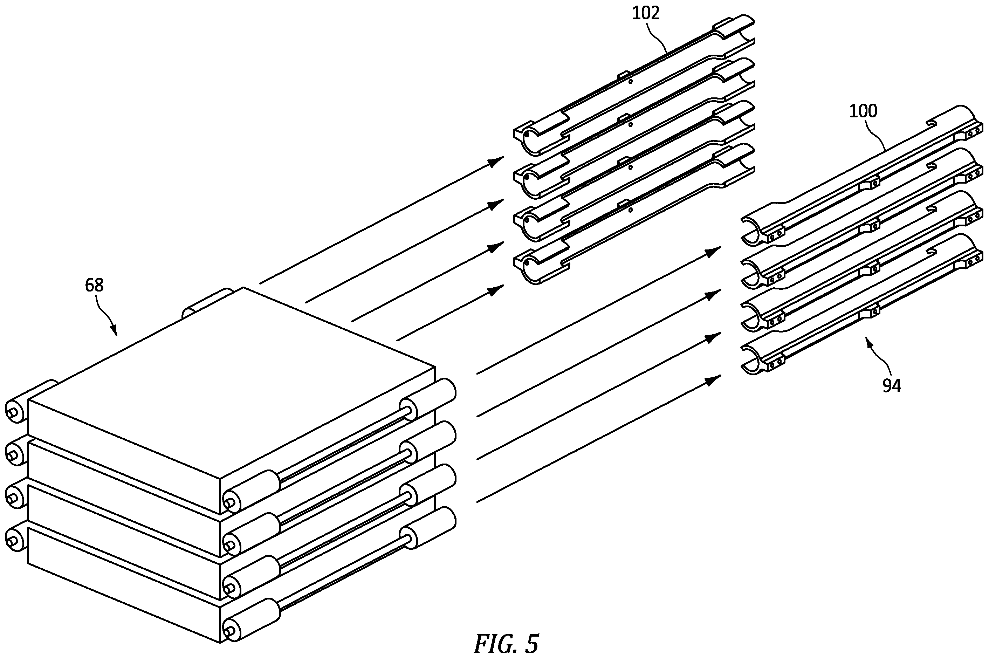

The rail assembly 108 of FIG. 4 is configured to facilitate translation (e.g., linear travel) of the battery pack 68 within a respective one of the rail assemblies 94 (e.g., along the Y-axis). FIG. 5 illustrates an exemplary relationship between the battery packs 68 and respective rail assemblies 94. The rail assembly 108 of FIGS. 4 and 5 includes a first rail 126 and a second rail 128. For example, the first rail 126 of FIG. 4 is disposed at (e.g., on, adjacent, or proximate) the first lateral side 114 and the second rail 128 of FIG. 4 is disposed at (e.g., on, adjacent, or proximate) the second lateral side 116. However, the present disclosure is not limited to foregoing exemplary configurations of the first rail 126 and the second rail 128. Each of the first rail 126 and the second rail 128 includes a shaft 130 and at least one rail portion 132. The shaft 130 extends (e.g., along the Y-axis) between and to a first shaft end 134 of the shaft 130 and a second shaft end 136 of the shaft 130. The first shaft end 134 may be disposed at (e.g., on, adjacent, or proximate) the first end 110. The second shaft end 136 may be disposed at (e.g., on, adjacent, or proximate) the second end 112. The at least one rail portion 132 may be configured for sliding engagement and/or locking engagement with the first rail 100 and the second rail 102. Each of the first rail 126 and the second rail 128 may include more than one rail portion 132. For example, the first rail 126 and the second rail 128 of FIGS. 4 and 5 include a first rail portion 132A and a second rail portion 132B. The first rail portion 132A is disposed at (e.g., on, adjacent, or proximate) the first shaft end 134. The second rail portion 132B is disposed at (e.g., on, adjacent, or proximate) the second shaft end 136. The first rail 100 and the second rail of FIG. 3 are configured as female rails to receive the first rail 126 and the second rail 128, respectively, which are configured as male rails. Of course, the male and female rail configurations of the battery storage assembly 82 and the battery packs 68 may be interchangeable.

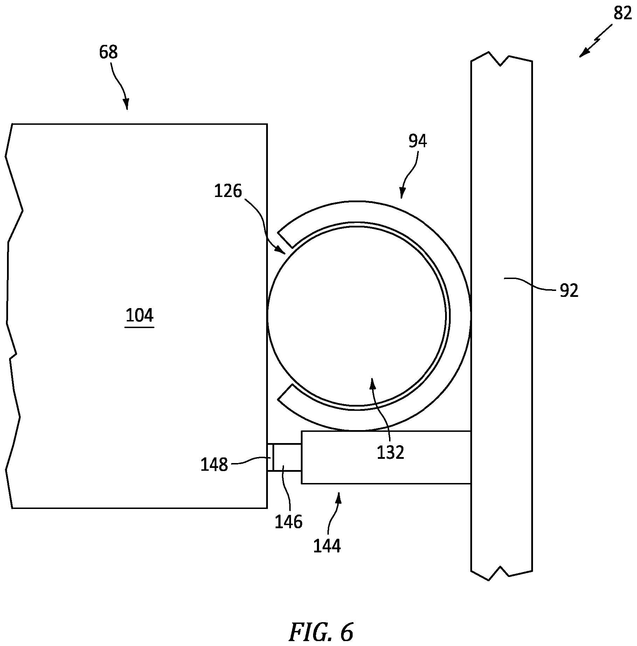

Referring to FIG. 6, the battery storage assembly 82 may include a linear actuator configured to effect linear translation (e.g., linear travel along the Y-axis) of the battery packs 68 to move the battery packs 68 into, out of, and within the battery storage assembly 82 (e.g., for a respective one of the rail assemblies 94). For example, each rail assembly 94 may include a linear actuator 144. FIG. 6 illustrates a cutaway view of the linear actuator 144 with a portion of one of the battery packs 68 and one of the rail assemblies 94. The linear actuator 144 of FIG. 6 is configured as a rack and pinion linear actuator. However, the present disclosure is not limited to this particular configuration of the linear actuator 144. The linear actuator 144 of FIG. 6 includes a pinion 146 (e.g., a circular gear) and a rack 148 (e.g., a linear gear). The pinion 146 is configured to rotate in meshed engagement with the rack 148. The linear actuator 144 may include an electric motor or other rotational mechanical actuator configured to effect rotation of the pinion 146. The rack 148 of FIG. 6 is disposed at (e.g., on, adjacent, or proximate) the first lateral side 114. The rack 148 may extend between and to the first end 110 and the second end 112 (see FIG. 4). Rotation of the pinion 146 in meshed engagement with the rack 148 effects linear translation of the battery pack 68 (e.g., along the Y-axis; FIG. 3) to move the battery pack 68 into, out of, and within the battery storage assembly 82.

The battery transfer assembly 84 is configured to facilitate transfer of the battery packs 68 from the battery assembly 24 (see FIGS. 1 and 2) to the battery storage assembly 82 and from the battery storage assembly 82 to the battery assembly 24. The battery transfer assembly 84 of FIG. 3 includes a battery transfer tray 150 and an actuator 152.

The battery transfer tray 150 of FIG. 3 includes a tray panel 154 and a rail assembly 156. The tray panel 154 extends between and to a first end 158 of the tray panel 154 and a second end 160 of the tray panel 154. The tray panel 154 extends between and to a first lateral side 162 of the tray panel 154 and a second lateral side 164 of the tray panel 154. The rail assembly 156 includes a first rail 166 and a second rail 168. For example, the first rail 166 of FIG. 3 is disposed at (e.g., on, adjacent, or proximate) the first lateral side 162 and the second rail 168 is disposed at (e.g., on, adjacent, or proximate) the second lateral side 164. However, the present disclosure is not limited to foregoing exemplary configurations of the first rail 166 and the second rail 168. The battery transfer tray 150 may additionally include a linear actuator, similar to the linear actuator 144, to effect linear translation (e.g., linear travel along the Y-axis) of the battery packs 68 to move the battery packs 68 into, out of, and within the battery transfer tray 150.

The actuator 152 interconnects the battery transfer tray 150 and the vehicle body 78. The actuator 152 of FIG. 3 extends outward (e.g., along the Z-axis) from the vehicle body 78 to the battery transfer tray 150. The actuator 152 is configured to move the battery transfer tray 150 (e.g., along the Z-axis) to align the battery transfer tray 150 with one of the rail assemblies 94 of the battery storage assembly 82 or one of the ports 1004 of the aircraft 1000 (see FIG. 2). The actuator 152 may be further configured to tilt the battery transfer tray 150 (e.g., relative to the Z-axis) to accommodate uneven airport tarmac conditions or other relative positional differences between the aircraft 1000 and the vehicle 76. The actuator 152 may be, for example, a hydraulic actuator, a pneumatic actuator, an electro-mechanical actuator, or any other actuator conventionally known in the art and suitable for selectively positioning the battery transfer tray 150.

The battery replacement controller 86 includes a processor 170 connected in signal communication with memory 172. The processor 170 may include any type of computing device, computational circuit, processor(s), CPU, computer, or the like capable of executing a series of instructions that are stored in the memory 172. Instructions can be directly executable or can be used to develop executable instructions. For example, instructions can be realized as executable or non-executable machine code or as instructions in a high-level language that can be compiled to produce executable or non-executable machine code. Further, instructions also can be realized as or can include data. Computer-executable instructions also can be organized in any format, including routines, subroutines, programs, data structures, objects, modules, applications, applets, functions, etc. The instructions may include an operating system, and/or executable software modules such as program files, system data, buffers, drivers, utilities, and the like. The executable instructions may apply to any functionality described herein to enable the vehicle 76 to accomplish the same algorithmically and/or by coordination of vehicle 76 components. For example, the battery replacement controller 86 may be connected in signal communication with the electric motor 90, the steering equipment, and/or the sensors of the propulsion assembly 80 to autonomously control movement of the vehicle 76. The battery replacement controller 86 may be further connected in signal communication with one or more of the battery packs 68 (e.g., stored by the battery storage assembly 82) to identify temperature, current, voltage, and state of charge (SoC) of the battery packs 68. The memory 172 may include a single memory device or a plurality of memory devices; e.g., a computer-readable storage device that can be read, written, or otherwise accessed by a general purpose or special purpose computing device, including any processing electronics and/or processing circuitry capable of executing instructions. The present disclosure is not limited to any particular type of memory device, which may be non-transitory, and may include read-only memory, random access memory, volatile memory, non-volatile memory, static memory, dynamic memory, flash memory, cache memory, volatile or non-volatile semiconductor memory, optical disk storage, magnetic disk storage, magnetic tape, other magnetic storage devices, or any other medium capable of storing one or more instructions, and/or any device that stores digital information. The memory device(s) may be directly or indirectly coupled to the battery replacement controller 86. The battery replacement controller 86 may include, or may be in communication with, an input device that enables a user to enter data and/or instructions, and may include, or be in communication with, an output device configured, for example to display information (e.g., a visual display or a printer), or to transfer data, etc. Communications between the controller 86 and other electrical and/or electronic components (e.g., controllers, sensors, etc.) may be via a hardwire connection or via a wireless connection. A person of skill in the art will recognize that portions of the controller 86 may assume various forms (e.g., digital signal processor, analog device, etc.) capable of performing the functions described herein.

The battery replacement controller 86 of FIG. 3 includes or is otherwise connected in signal communication with a user interface terminal 174. The user interface terminal 174 may include a display, a touchscreen, a keyboard, or any other combination of input and output devices to allow a pilot or other operator to provide data and/or instructions to the battery replacement controller 86 using the user interface terminal 174. The user interface terminal 174 may be disposed on the vehicle 76. For example, the user interface terminal 174 of FIG. 3 is disposed on the first lateral housing panel 96. The battery replacement controller 86 may additionally be connected in signal communication (e.g., wireless communication) with the controller 26. The battery replacement controller 86 may be configured to receive data associated with the aircraft 1000 flight plan, the status of the battery packs 68 installed in the battery assembly 24, or other information, as will be discussed in further detail. The controller 26 and the battery replacement controller 86 may be configured to allow the pilot or other operator to provide data and/or instructions to the battery replacement controller 86 from the aircraft 1000 via the controller 26.

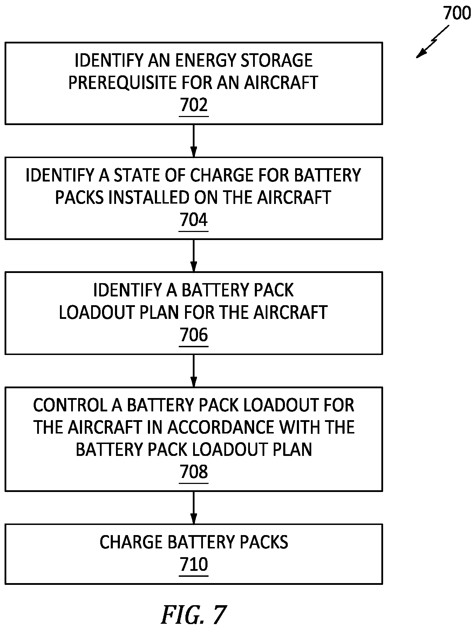

Referring to FIGS. 1-3 and 7, a Method 700 for controlling a battery pack loadout for an aircraft is provided. FIG. 7 illustrates a flowchart for the Method 700. The Method 700 will be described herein with respect to the aircraft 1000, the aircraft propulsion system 20, and the vehicle 76. The controller 26 (e.g., the processor 70) and/or the battery replacement controller 86 (e.g., the processor 170) may be used to execute or control one or more steps of the Method 700 for controlling the battery pack 68 loadout for the aircraft 1000. For example, the processor 170 may execute instructions stored in memory 172, thereby causing the controller 86 and/or its processor 170 to execute or otherwise control one or more steps of the Method 700. However, it should be understood that the Method 700 is not limited to use with the aircraft 1000, the aircraft propulsion system 20, or the vehicle 76. Unless otherwise noted herein, it should be understood that the steps of Method 700 are not required to be performed in the specific sequence in which they are discussed below and, in some embodiments, the steps of Method 700 may be performed separately or simultaneously.

Step 702 includes identifying an energy storage prerequisite for the aircraft 1000 and its battery assembly 24. The energy storage prerequisite refers to a minimum amount of energy (e.g., an energy storage threshold) stored by all of the battery packs 68 installed in the battery assembly 24 combined, which may be required for an immediately subsequent flight or series of flights of the aircraft 1000. The battery replacement controller 86 may identify the energy storage prerequisite for the aircraft 1000 using information received from a pilot or other operator (e.g., from the user interface terminal 174) and/or from the controller 26. For example, a pilot for the aircraft 1000 may enter flight plan information for the immediately subsequent flight or series of flights of the aircraft 1000 into the user interface terminal 174, and the battery replacement controller 86 may use the flight plan information to identify the energy storage prerequisite for the aircraft 1000. The flight plan information may include information such as, but not limited to, a departure location, a landing location, a flight distance, an aircraft model for the aircraft 1000, a number of passengers (e.g., "souls on board"), aircraft 1000 weight, anticipated weather conditions, additional backup power requirements, and the like. The battery replacement controller 86 may apply the flight plan information to one or more databases or look-up tables (e.g., stored in the memory 172) to identify the energy storage prerequisite for the immediately subsequent flight or series of flights of the aircraft 1000. Identifying the energy storage prerequisite may additionally include applying a safety margin to the energy storage prerequisite to account for additional, unplanned energy demand for the battery packs 68.

Step 704 may optionally be performed to identify a current state of charge (SoC) for the battery packs 68 installed in the battery assembly 24. For example, the controller 26 may identify a SoC for each of the battery packs 68 installed in the battery assembly 24 and provide the SoC for each of the battery packs to the battery replacement controller 86. Identifying the current SoC for the battery packs 68 installed in the battery assembly 24 may include identifying a SoC hierarchy for the battery packs 68. For example, the controller 26 and/or the battery replacement controller 86 may identify the one of the battery packs 68 having the lowest SoC, the one of the battery packs 68 having the second lowest SoC, etc., such that all of the battery packs 68 are classified in order of their relative SoC.

Step 706 includes identifying a battery pack 68 loadout plan for the aircraft 1000 and its battery assembly 24. The battery replacement controller 86 may identify the battery pack 68 loadout plan for the aircraft 1000 using the identified energy storage prerequisite (see Step 702), the identified current SoC for the battery packs 68 installed in the battery assembly 24, the battery packs 68 stored in the battery storage assembly 82 (e.g., via the connection interface 106), and/or the battery packs 68 stored outside the battery storage assembly 82 but otherwise stored and/or maintained by the battery replacement system 74 (e.g., on a separate vehicle 76, fixed battery pack storage assembly, etc.). The battery pack 68 loadout plan includes the specific battery packs 68 which will be installed on the aircraft 1000 and its battery assembly 24 in preparation for the immediately subsequent flight or series of flights of the aircraft 1000 to satisfy the identified energy storage prerequisite. The specific battery packs 68 identified in the battery pack 68 loadout plan may include battery packs 68 currently installed on the aircraft 1000 and its battery assembly 24, battery packs 68 stored in the battery storage assembly 82, battery packs 68 stored outside the battery storage assembly 82 but otherwise stored and/or maintained by the battery replacement system 74, and/or combinations thereof. The battery replacement controller 86 selects the specific battery packs 68 of the battery pack 68 loadout plan such that the total SoC of the battery packs 68 identified by the battery pack 68 loadout plan is greater than or equal to the identified energy storage prerequisite. Of course, in some cases, the battery replacement controller 86 may identify that the battery packs 68 currently installed on the aircraft 1000 and its battery assembly 24 have a sufficient combined SoC for the immediately subsequent flight or series of flights of the aircraft 1000. In this case, the vehicle 76 may take no further action to control the battery pack 68 loadout for the aircraft 1000 and its battery assembly 24.

The battery replacement controller 86 may identify the battery pack 68 loadout plan using the SoC hierarchy to minimize a number of battery pack 68 replacements which may be performed to execute the battery pack 68 loadout plan. For example, the battery pack 68 loadout plan may include instructions for replacing the lowest SoC battery pack 68 installed on the aircraft 1000 and its battery assembly 24 with another of the battery packs 68 stored in the battery storage assembly 82, which another of the battery packs 68 may be fully or substantially fully charged or may have a SoC which is greater than the lowest SoC battery pack 68.

The battery replacement controller 86 may identify the battery pack 68 loadout plan to include a quantity of the battery packs 68 which is less than a capacity of the battery packs 68 (e.g., a maximum quantity of installed battery packs 68) provided by the aircraft 1000 and its battery assembly 24. For example, the aircraft 1000 and its battery assembly 24 may have a capacity for five battery packs 68 and the battery replacement controller 86 may identify the battery pack 68 loadout plan to include four battery packs 68 which satisfy the identified energy storage prerequisite. By minimizing the number of the battery packs 68 which will be installed in accordance with the identify battery pack 68 loadout plan, the battery replacement controller 86 may facilitate a reduction in aircraft 1000 weight and, thereby, improve efficiency of the aircraft 1000.

Step 708 includes controlling the battery pack 68 loadout for the aircraft 1000 in accordance with the identified battery pack 68 loadout plan (see Step 706). The battery replacement controller 86 may control components of the vehicle 76 to remove one or more of the battery packs 68 current installed on the aircraft 1000 and its battery assembly 24 and/or to install one or more of the battery packs 68 stored by the battery storage assembly 82 into the aircraft 1000 and its battery assembly 24.

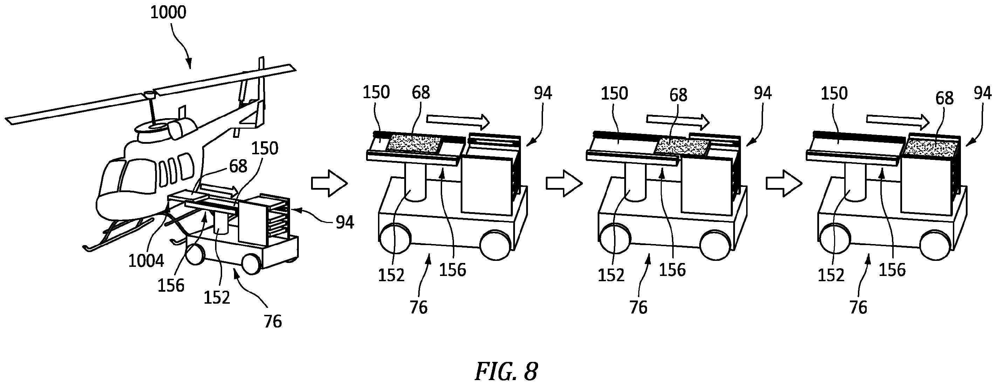

FIG. 8 illustrates an exemplary battery pack 68 removal sequence using the vehicle 76. The battery replacement controller 86 may control components of the vehicle 76 to effect removal and storage of one or more of the battery packs 68 installed in the aircraft 1000 and its battery assembly 24 (see FIGS. 1 and 2), as identified in the battery pack 68 loadout plan. The battery replacement controller 86 may control a position of the battery transfer tray 150 (e.g., using the actuator 152) to align the battery transfer tray 150 with one of the ports 1004 of the aircraft 1000. The battery pack 68 of FIG. 8 may be removed (e.g., electrically and physically disconnected) from the battery assembly 24 by the battery transfer tray 150 and/or the battery assembly 24, and thereby positioned onto the battery transfer tray 150 (e.g., the rail assembly 156). The battery replacement controller 86 (see FIG. 3) may then control a position of the battery transfer tray 150 (e.g., using the actuator 152) to align the battery transfer tray 150 with an empty one of the plurality of rail assemblies 94 (e.g., one of the rail assemblies 94 which is not already storing one of the battery packs 68). The battery pack 68 may then be moved from the battery transfer tray 150 to the empty one of the plurality of rail assemblies 94 for storage and/or charging.

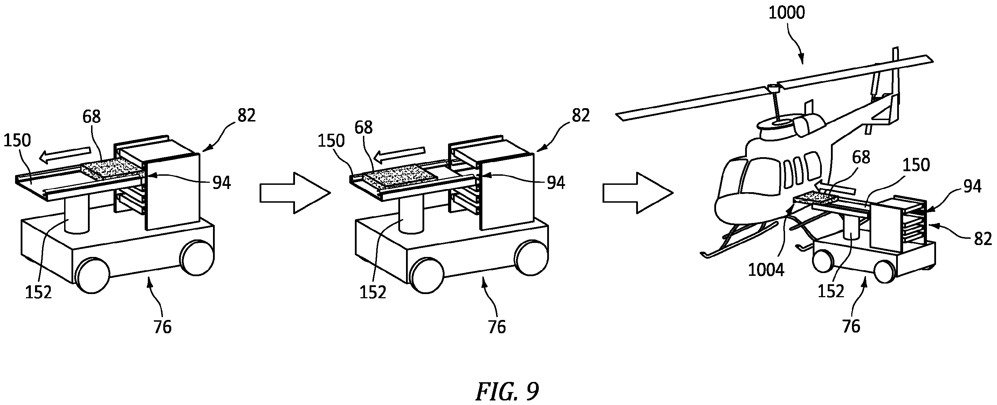

FIG. 9 illustrates an exemplary battery pack 68 installation sequence using the vehicle 76. The battery replacement controller 86 (see FIG. 3) may control components of the vehicle 76 to effect installation of one or more of the battery packs 68 stored in the battery storage assembly 82 into the aircraft 1000 and its battery assembly 24 (see FIGS. 1 and 2), as identified in the battery pack 68 loadout plan. The battery replacement controller 86 may control a position of the battery transfer tray 150 (e.g., using the actuator 152) to align the battery transfer tray 150 with one of the plurality of rail assemblies 94 storing one of the battery packs 68 to be installed into the aircraft 1000 and its battery assembly 24 in accordance with the battery pack 68 loadout plan. The battery pack 68 of FIG. 9 may be moved from the one of the plurality of rail assemblies 94 to the battery transfer tray 150. The battery replacement controller 86 may then control a position of the battery transfer tray 150 (e.g., using the actuator 152; see FIG. 6)) to align the battery transfer tray 150 with one of the ports 1004 of the aircraft 1000. The battery pack 68 of FIG. 9 may be moved from the battery transfer tray 150 to one of the ports 1004 of the aircraft 1000 and installed into the aircraft 1000 and electrically and physically connected with the battery assembly 24.

Step 710 may optionally be performed to charge one or more of the battery packs 68 stored by the battery storage assembly 82. For example, the battery replacement controller 86 may control the vehicle 76 to move to a location of a battery charging station and position (e.g., electrically connect) the battery packs 68 stored in the battery storage assembly 82 to be directly charged by the battery charging station or indirectly through an electrical connection between the vehicle 76 (e.g., the battery storage assembly 82) and the connection interface 106 (e.g., the electrical connection terminals 122). In some embodiments, the vehicle 76 may be configured to charge the battery packs 68 using energy stored by the vehicle battery 88. Alternatively, the vehicle 76 may be connected to the battery charging station to charge the vehicle battery 88 and the vehicle 76 may additionally charge the battery packs 68 using electrical power from the battery charging station.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected, or the like may include permanent, removable, temporary, partial, full and/or any other possible attachment option.

No element, component, or method step in the present disclosure is intended to be dedicated to the public regardless of whether the element, component, or method step is explicitly recited in the claims. As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements.

## Claims

1. A battery replacement system (74) for controlling a battery pack loadout for an aircraft (1000), the battery replacement system (74) comprising:
a vehicle (76) including a battery storage assembly (82), a controller (86), and a battery transfer assembly (84),
the battery storage assembly (82) configured for storing at least one stored battery pack (68), and
the controller (86) including a processor (170) in communication with a non-transitory memory (172) storing instructions, which instructions when executed by the processor (170), cause the processor (170) to:
identify an energy storage prerequisite for a flight or series of flights of the aircraft (1000) using flight information for the aircraft (1000);
identify a battery pack loadout plan for the aircraft (1000) using the energy storage prerequisite, the battery pack loadout plan identifying one or more of the at least one stored battery pack (68) to be installed on the aircraft (1000); and
control the battery pack loadout for the aircraft (1000) by controlling the battery transfer assembly (84) to receive the one or more of the at least one stored battery pack (68) from the battery storage assembly (82) and install the one or more of the at least one stored battery pack (68) into the aircraft (1000).

2. The battery replacement system of claim 1, wherein the battery pack loadout plan further identifies at least one installed battery pack (68) installed on the aircraft (1000) to be removed from the aircraft (1000).

3. The battery replacement system of claim 2, wherein the instructions, when executed by the processor (170), further cause the processor (170) to control the battery pack loadout for the aircraft (1000) by controlling the battery transfer assembly (84) to receive the at least one installed battery pack (68) from the aircraft (1000) and move the at least one installed battery pack (68) to the battery storage assembly (82).

4. The battery replacement system of claim 1, 2 or 3, wherein the controller (86) further includes a user interface terminal (174) on the vehicle (76), and the instructions, when executed by the processor (170), further cause the processor (170) to receive the flight information from the user interface terminal (174).

5. The battery replacement system of any preceding claim, wherein the flight information includes one or more of a departure location, a landing location, a flight distance for the flight or the series of flights, an aircraft model of the aircraft (1000), a number of passengers for the flight or the series of flights, an aircraft weight of the aircraft (1000), or a weather condition.

6. The battery replacement system of any preceding claim, wherein the aircraft (1000) has a battery pack capacity and the battery pack loadout plan includes a quantity of battery packs (68) which is less than the battery pack capacity.

7. The battery replacement system of any preceding claim, wherein the battery storage assembly (82) includes a plurality of rail assemblies (94), each rail assembly (94) of the plurality of rail assemblies (94) includes a first rail (100) and a second rail (100), and each stored battery pack (68) of the at least one stored battery pack (68) is disposed on the first rail (100) and the second rail (102) of a respective one of the plurality of rail assemblies (94).

8. The battery replacement system of claim 7, wherein the battery storage assembly (82) further includes at least one linear actuator (144), and the at least one linear actuator (144) is configured to move the at least one stored battery pack (68) from the plurality of rail assemblies (94) to the battery transfer assembly (84), and/or wherein the battery transfer assembly (84) includes a battery transfer tray (150) and an actuator (152), the battery transfer tray (150) includes a transfer rail assembly (156) including a first transfer rail (166) and a second transfer rail (168), the battery transfer tray (150) is mounted to the actuator (152), and the actuator (152) is configured to selectively position the transfer rail assembly (156) at one of the rail assemblies (94) of the plurality of rail assemblies (94).

9. The battery replacement system of any preceding claim, further comprising the at least one stored battery pack (68), the at least one stored battery pack (68) including a battery rail assembly (108) including a first battery rail (126) and a second battery rail (128).

10. The battery replacement system of any preceding claim, wherein the instructions, when executed by the processor (170), further cause the processor (170) to identify a state of charge for each of the at least one stored battery pack (68) and identify the battery pack loadout plan using the energy storage prerequisite and the identified state of charge for each of the at least one stored battery pack (68), and, optionally, wherein the battery pack loadout plan identifies a plurality of battery packs (68) for the aircraft (1000), the plurality of battery packs (68) having a combined state of charge which is equal to or greater than the energy storage prerequisite, the plurality of battery packs (68) including the at least one stored battery pack (68).

11. A method for controlling a battery pack loadout for an aircraft (1000), the method comprising:
receiving flight information for a flight or series of flights of the aircraft (1000) with a controller (86);
identifying, with the controller (86), an energy storage prerequisite for the flight or series of flights of the aircraft (1000) using the flight information for the aircraft (1000);
identifying, with the controller (86), a battery pack loadout plan for the aircraft (1000), the battery pack loadout plan identifying a plurality of battery packs (68) for the aircraft (1000), the plurality of battery packs (68) having a combined state of charge which is equal to or greater than the energy storage prerequisite; and
controlling the battery pack loadout for the aircraft (1000) by controlling a vehicle (76), with the controller (86), to remove a first battery pack (68) from the aircraft (1000) and to install a second battery pack (68) into the aircraft (1000) such that the aircraft (1000) includes the plurality of battery packs (68).

12. The method of claim 11, wherein receiving the flight information includes receiving the flight information from a user interface terminal (174) disposed on the vehicle (76).

13. The method of claim 11 or 12, wherein the flight information includes one or more of a departure location, a landing location, a flight distance for the flight or the series of flights, an aircraft model of the aircraft (1000), a number of passengers for the flight or the series of flights, an aircraft weight of the aircraft (1000), or a weather condition.

14. The method of claim 11, 12 or 13, wherein the aircraft (1000) has a battery pack capacity and the battery pack loadout plan includes a quantity of battery packs (68) which is less than the battery pack capacity.

15. The method of any of claims 11 to 14, wherein removing the first battery pack (68) from the aircraft (1000) includes removing the first battery pack (68) with a battery transfer assembly (84) of the vehicle (76), moving the first battery pack (68) from the battery transfer assembly (84) to a battery storage assembly (82) of the vehicle (1000), and storing the first battery pack (68) in the battery storage assembly (82).
